(19) Europäisches Patentamt / European Patent Office / Office européen des brevets

(11) **EP 4 252 399 B1**

(12) **EUROPEAN PATENT SPECIFICATION**

(45) Date of publication and mention
of the grant of the patent:
**12.02.2025 Bulletin 2025/07**

(21) Application number: **21905858.3**

(22) Date of filing: **20.12.2021**

(51) International Patent Classification (IPC):
**H04L 45/24** *(2022.01)*      **H04L 45/42** *(2022.01)*

(52) Cooperative Patent Classification (CPC):
**H04L 45/42; H04L 45/24**

(86) International application number:
**PCT/CN2021/139782**

(87) International publication number:
**WO 2022/127936 (23.06.2022 Gazette 2022/25)**

(54) **METHODS, APPARATUS AND SYSTEM FOR CREATING SR POLICY USING PATH COMPUTATION ELEMENT PROTOCOL**

VERFAHREN, VORRICHTUNG UND SYSTEM ZUR ERZEUGUNG EINER SR-RICHTLINIE UNTER VERWENDUNG EINES PFADBERECHNUNGSELEMENTPROTOKOLLS

PROCÉDÉS, APPAREIL ET SYSTÈME POUR CRÉER UNE POLITIQUE SR À L'AIDE D'UN PROTOCOLE D'ÉLÉMENT DE CALCUL DE TRAJET

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.12.2020 IN 202031055293**

(43) Date of publication of application:
**04.10.2023 Bulletin 2023/40**

(73) Proprietor: **Huawei Technologies Co., Ltd.
Shenzhen, Guangdong 518129 (CN)**

(72) Inventor: **DHODY, Dhruv
Bangalore 560 049 (IN)**

(74) Representative: **Epping - Hermann - Fischer
Patentanwaltsgesellschaft mbH
Schloßschmidstraße 5
80639 München (DE)**

(56) References cited:
WO-A1-2020/060826      WO-A1-2020/162361
CN-A- 111 726 294      CN-A- 111 917 643
CN-A- 112 054 958

- BIDGOLI H ET AL: "PCEP extensions for p2mp sr policy; draft-hsd-pce-sr-p2mp-policy-00.txt", 8 July 2019 (2019-07-08), pages 1 - 39, XP015134038, Retrieved from the Internet <URL:https://tools.ietf. org/html/draft-hsd-pce-sr-p2mp-policy-00> [retrieved on 20190708]
- BIDGOLI H ET AL: "PCEP extensions for p2mp sr policy; draft-dhs-spring-pce-sr-p2mp-policy-00.txt", 11 March 2019 (2019-03-11), pages 1 - 20, XP015131742, Retrieved from the Internet <URL:https://tools.ietf. org/html/draft-dhs-spring-pce-sr-p2mp-poli cy-00> [retrieved on 20190311]

**Description**

**TECHNICAL FIELD**

The present disclosure described herein, in general, relates to network to a Software Defined Network (SDN) enabled network. In particular, the embodiments describes in the present disclosure relate to system, apparatuses and methods using a Path Computation Element Protocol (PCEP).

**BACKGROUND**

Segment Routing (SR) is a source-based routing technique that simplifies traffic engineering and management across network domains. It removes network state information from transit routers and nodes in the network and places the path state information into packet headers at an ingress node i.e. an ingress node may prepend a header to packets that contain a list of segments, which are instructions that are executed on subsequent nodes in the network. These instructions may be forwarding instructions, such as an instruction to forward a packet to a specific destination or interface. Segment routing works either on top of a MPLS network or on an IPv6 network. In an SR-MPLS network, segments are encoded as MPLS labels. Under SRv6, a new header called a Segment Routing Header (SRH) is used. Segments in a SRH are encoded in a list of IPv6 addresses.

A Path Computation Element (PCE) is an entity that is capable of computing a network path or route based on a network graph, and of applying computational constraints during the computation. The PCE entity is an application that can be located within a network node or component, on a server, etc. The PCE receives the path computation request from a Path Computation Client (PCC), the path computation request requesting a path initiating at the PCC. The PCE computes the path from the PCC to an egress node via an intermediate node in response to the path computation request, and assigns label information for a label switched path (LSP) from the PCC, the intermediate node, and the egress node. The PCE sets up the LSP along the computed path by transmitting the label information directly to the PCC, the intermediate node, and the egress node for storage in a Forwarding Information Base (FIB).

Path Computation Element Protocol (PCEP) defines the communication between a Path Computation Client (PCC) and a Path Computation Element (PCE), or between PCE and PCE, enabling computation of Multiprotocol Label Switching (MPLS) for Traffic Engineering Label Switched Path (TE LSP) characteristics.

PCE is used to compute the SR path in the SR networks. Path Computation Element Protocol (PCEP) has been extended to support this. Reference is made to Internet Draft of PCE working group titled "PCEP Procedures and Protocol Extensions for Using PCE as a Central Controller (PCECC) of LSPs". A PCE-based central controller (PCECC) can simplify the processing of a distributed control plane by blending it with elements of SDN and without necessarily completely replacing it. PCECC allows the PCE to encode various Central Controller's Instructions (CCI) to be executed at the PCC.

An SR Policy is a framework that enables instantiation of an ordered list of segments on a node for implementing a source routing policy with a specific intent for traffic steering from that node. SR policy is built using any type of Segment Identifier (SID) including those associated with topological or service instructions. An SR Policy is associated with one or more candidate paths (CP). A candidate path is the unit for signaling of an SR Policy to a headend via protocols like PCEP and the SR-Policy is carried as part of a new association type encoded along with these candidate path. Reference is made to Internet Draft of PCE working group tiled "PCEP extension to support Segment Routing Policy Candidate Paths".

In the existing solutions for supporting segment routing (SR) using PCEP extensions there is no way to create a SR policy independent of candidate paths in PCEP. The SR policy created in PCEP is always defined as a collection of candidate paths. For example, the SR Policy named 'POL1' is shown below-

SR policy POL1 <headend, color, endpoint>

    Candidate-path CP1 <protocol-origin = 20, originator = 100:1.1.1.1, discriminator = 1>

Preference 200
Weight W1, SID-List1 <SID11...SID1i>
Weight W2, SID-List2 <SID21...SID2j>

    Candidate-path CP2 <protocol-origin = 20, originator = 100:2.2.2.2, discriminator = 2>

Preference 100
Weight W3, SID-List3 <SID31...SID3i>

Weight W4, SID-List4 <SID41...SID4j>

An SR policy is identified by <headend, color, end-point> tuple. The headend is the node where the policy is instantiated/ implemented. The headend is specified as an IPv4 or IPv6 address and is expected to be unique in the domain. The endpoint indicates the destination of the policy. The endpoint is specified as an IPv4 or IPv6 address and is expected to be unique in the domain. The color is a 32-bit numerical value that associates the SR Policy with an intent (e.g. low-latency, high bandwidth, etc.). The endpoint and the color are used to automate the steering of service or transport routes on SR Policies. The SR policy defined in the above example defines two candidate paths (CP1 and CP2) and a preference of the candidate path is used to select the best candidate path for an SR Policy. Each candidate path (CP1 and CP2) is identified by a tuple <protocol-origin, originator, discriminator>. CP1 is the active candidate path (it is valid and it has the highest preference). The two Segment-Lists of CP1 are installed as the forwarding instantiation of SR policy POL1. More details with respect to defining the SR policy in the above example can be found in the Internet Draft titled "Segment Routing Policy Architecture" of the SPRING working group." In PCEP, the following extensions exist, referring to Internet Draft "PCEP extension to support Segment Routing Policy Candidate Paths":

- A new SR Policy Association Type
- Each candidate path also include common information - Color, Endpoint in SR Policy Identifier TLV (Type, Length Value) and SR Policy Name
- Each candidate path further also includes individual Candidate path Identifier TLV and path preference information.
- SR Policy information is attached to each candidate path as an association information

One disadvantage of always associating the SR policy creation to candidate path is that if the candidate path goes down in a network, the entire SR policy may fail, depending upon the status of other candidate paths associated with that SR policy. The current PCEP does not allow creating a SR policy independent of the candidate paths. SR policy is container information that remains constant and needs to be encoded along with each candidate path individually.

BIDGOLI H ET AL: "PCEP extensions for p2mp sr policy; draft-hsd-pce-sr-p2mp-policy-00.txt",PCEP EXTENSIONS FOR P2MP SR POLICY; DRAFT-HSD-PCE-SR-P2MP-POLICY-OO.TXT; INTERNET-DRAFT: NETWORK WORKING GROUP, INTERNET ENGINEERING TASK FORCE, IETF; STANDARDWORKINGDRAFT, INTERNET SOCIETY (ISOC) 4,https://tools.ietf.org/html/draft-hsd- pce-sr-p2mp-policy-00 and BIDGOLI H ET AL: "PCEP extensions for p2mp sr policy; draft-dhs- spring-pce-sr-p2mp-policy-00.txt",PCEP EXTENSIONS FOR P2MP SR POLICY; DRAFT-DHS-SPRING-PCE-SR-P2MP- POLICY-00.TXT; INTERNET-DRAFT: NETWORK WORKING GROUP, INTERNET ENGINEERING TASK FORCE, IETF; STANDARDWORKINGDRAFT, INTERNET SOCIETY, https://tools.ietforg/html/ draft-dhs- spring-pce-sr-p2mp-policy-00 specify extensions to the Path Computation Element Communication Protocol (PCEP) that allow a stateful PCE to compute and initiate P2MP paths from a Root to a set of Leaves.

## SUMMARY

This summary is provided to introduce concepts related to segment routing (SR) policy instantiation via Path Communication Element Protocol (PCEP), and the same are further described below in the detailed description. This summary is not intended to identify essential features of the claimed subject matter nor is it intended for use in determining or limiting the scope of the claimed subject matter.

A main objective of the present disclosure is to provide a mechanism using PCEP to create SR policy independent of the candidate paths. Once the SR policy is created as a container, one or more candidate paths may be associated to the SR policy container without encoding the SR policy with every other candidate path newly created. Similarly, the existing candidate paths can be modified or deleted without encoding the SR policy along with each candidate path.

Another object of the present disclosure is to provide a mechanism to delete an SR policy independently of the candidate path.

The invention is defined in te claims. In the following, parts of the description and drawings referring to embodiments which are not covered by the claims are not presented as embodiments of the invention, but as examples useful for understanding the invention.

In contrast to the prior-art, the main benefits according to the present disclosure is that it is no longer necessary to send all the SR policy information with every candidate path that belongs to the same SR policy. The Central Control mechanism supported in PCEP is used to create a SR policy as an empty container at the PCC independent of creating the candidate paths at the PCE. As a result, the complexity owing to sending the SR policy parameters with every candidate path is reduced and also the complexity owing to search for the availability of the SR policy that is sent with each candidate path from the PCE to the PCC, is reduced. The overall effect is that a SR policy can be created, modified and deleted independent of the candidate paths.

The various options and preferred embodiments referred to above in relation to the first implementation are also applicable in relation to the other implementations.

**BRIEF DESCRIPTION OF THE ACCOMPANYING DRAWINGS**

The detailed description is described with reference to the accompanying figures. In the figures, the left-most digit(s) of a reference number identifies the figure in which the reference number first appears. The same numbers are used throughout the drawings to refer like features and components.

Figure 1 illustrates a schematic diagram of a label switched network according to one implementation of the present invention.
Figure 2 illustrates a schematic illustration of node according to one implementation of the present invention.
Figure 3 illustrates a method in accordance with an embodiment of the present invention.
Figure 4 illustrates a method performed by a PCE in accordance with one embodiment of the present invention.
Figure 5 illustrates a method performed by a PCE in accordance with another embodiment of the present invention.
Figure 6 illustrates a method performed by a PCE in accordance with yet another embodiment of the present invention.
Figure 7 illustrates a method performed by a PCE in accordance with yet another embodiment of the present invention.
Figure 8 illustrates a method performed by a PCE in accordance with yet another embodiment of the present invention.
Figure 9 illustrates a method performed by a PCC in accordance with one embodiment of the present invention.
Figure 10 illustrates a method performed by a PCC in accordance with another embodiment of the present invention.
Figure 11 illustrates a method performed by a PCC in accordance with yet another embodiment of the present invention.
Figure 12 illustrates a method performed by a PCC in accordance with yet another embodiment of the present invention.
Figure 13 illustrates a method performed by a PCC in accordance with yet another embodiment of the present invention.
Figure 14 illustrates a schematic illustration of PCE according to one implementation of the present invention.
Figure 15 illustrates a schematic illustration of PCC according to one implementation of the present invention.
Figure 16 illustrates a schematic illustration of system comprising a PCE and a PCC according to one implementation of the present invention.

It is to be understood that the attached drawings are for purposes of illustrating the concepts of the invention and should not be construed as a limitation to the present invention.

**DETAILED DESCRIPTION OF THE PRESENT DISCLOSURE**

The following clearly describes the technical solutions in the embodiments of the present disclosure with reference to the accompanying drawings in the embodiments of the present disclosure. Apparently, the described embodiments are merely a part rather than all of the embodiments of the present disclosure.

The invention can be implemented in numerous ways, as a process, an apparatus, a system, a composition of matter, a computer readable medium such as a computer readable storage medium or a computer network wherein program instructions are sent over optical or electronic communication links. In this specification, these implementations, or any other form that the invention may take, may be referred to as techniques.

A detailed description of one or more embodiments of the invention is provided below along with accompanying figures that illustrate the principles of the invention. The invention is described in connection with such embodiments, but the invention is not limited to any embodiment. The scope of the invention is limited only by the claims. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

In the following detailed description, numerous specific details are set forth in order to provide a thorough understanding of the invention. However, it will be understood by those skilled in the art that the present disclosure may be practiced without these specific details. In other instances, well-known methods, procedures, and components, modules, units and/or circuits have not been described in detail so as not to obscure the invention.

Although embodiments of the invention are not limited in this regard, discussions utilizing terms such as, for example, "processing," "computing," "calculating," "determining," "establishing", "analyzing", "checking", or the like, may refer to operation(s) and/or process(es) of a computer, a computing platform, a computing system, or other electronic computing device, that manipulates and/or transforms data represented as physical (e.g., electronic) quantities within the computer's registers and/or memories into other data similarly represented as physical quantities within the computer's registers and/or memories or other information non-transitory storage medium that may store instructions to perform operations and/or processes.

Although embodiments of the invention are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like. Unless explicitly stated, the method embodiments described herein are not constrained to a particular order or sequence. Additionally, some of the described method embodiments or elements thereof can occur or be performed simultaneously, at the same point in time, or concurrently.

The present disclosure relates to segment routing (SR) policy instantiation via Path Computing Element Protocol (PCEP). In accordance with the embodiments of the present invention a Path Computation Element (PCE) instantiates a SR policy at the Path Computation Client. The PCE and the PCC communicate with each other using PCEP messages which are also defined in the Internet Drafts titled 'PCEP Procedures and Protocol Extensions for Using PCE as a Central Controller (PCECC) of LSPs' and 'PCEP extension to support Segment Routing Policy Candidate Paths'. The PCE may therefore act upon the instructions of a Central Controller or itself act as a Path Computation Element Central Controller (PCECC) using the PCEP extensions already defined.

An SR policy contains one or more candidate paths where one or more such paths can be computed via PCE. In the existing mechanism, the candidate paths instantiated by the PCE at the PCC signals additional information to map candidate paths to their SR policies. Each candidate path maps to a unique PLSP-ID (Path LSP-ID) (Path Label Switched Path-Identifier) in PCEP. The existing mechanism creates a grouping of LSPs which can be used to define associations between a set of LSPs thereby associating multiple candidate paths belonging to the same SR policy together. Further, the existing mechanism also define a PCEP Association object by defining an association type, also referred to as 'SR Policy Association' specifically for associating SR candidate paths into a single SR policy.

The present disclosure is directed to provide a mechanism that allows for SR policy initiation independent of the candidate path. For an SR policy, the SR policy parameters are color and endpoint. This allows for creation of the SR policy to be instantiated and created independent of the candidate path. Thereafter, for a group of candidate paths, belonging to the same SR policy, can be instantiated. At least for the first candidate path, the SR policy parameters and an Association Type (SR Policy Association already defined in Internet Draft) is exchanged between the PCE and the PCC. For the subsequent candidate paths, only the SR policy Association ID is exchanged, and thus all the SR policy parameters are not required to be exchanged for each candidate path that is instantiated by the PCE on the PCC. One of the key advantages identified with creating the SR policy as a container independent of the candidate path is that the SR policy may be retained even if the candidate path goes down in a network. The foregoing embodiments disclose the present invention in more detail.

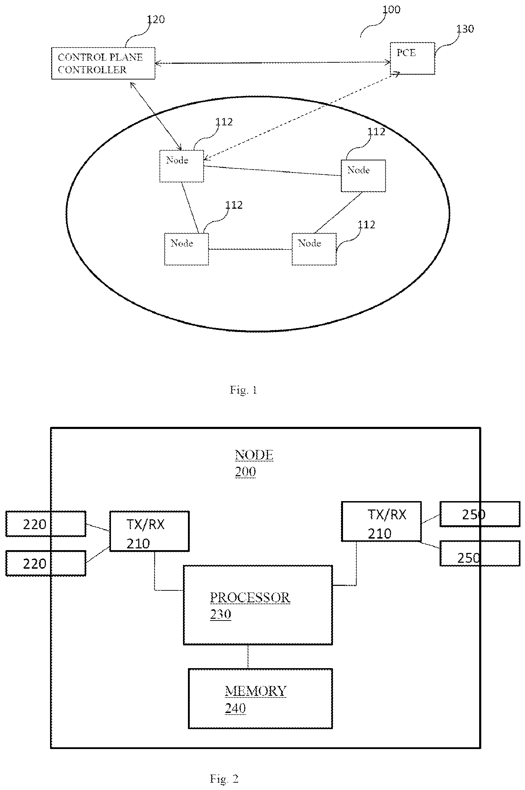

Fig. 1 illustrates a schematic diagram of a label switched network 100. In Software Defined Networks (SDN), the PCE is enabled to act as a PCECC (Path Computation Element Central Controller). The label switched network 100 comprises of a control plane controller 120, and at least one PCE 130 and a plurality of nodes 112. In one implementation, the PCE 130 may act as a PCECC. In another implementation, the PCE 130 may be implemented in a node 112 and act upon instructions of the controller plane controller 120 in other implementation. The role of a PCE as a PCECC is known and therefore not discussed in detail in the present disclosure. The components of the label switched network 100 communicate with each other via optical, electrical, or wireless means. When the label switched network is a packet switched network, data traffic is transported using packets or frames along network paths or routes. The packets may be routed or switched along a TE (Traffic Engineering) LSP (Label Switched Path) established by a signaling protocol, such as MPLS or Generalized MPLS (GMPLS), based on a path computed by the PCE and/or developed by the nodes 112. Nodes 112 are any devices or components that support transportation of the packets through the label switched network 110. For example, the nodes 112 may include bridges, switches, routers, or various combinations of such devices. The nodes 112 comprise a plurality of ingress ports for receiving packets from other nodes 112, logic circuitry that determines which nodes 112 to send the frames to, and a plurality of egress ports for transmitting frames to the other nodes 112. In some embodiments, at least some of the nodes 112 are label switched routers (LSRs), which are configured to modify or update the labels of the packets transported in the label switched network 110. In some embodiments, some of the nodes 112 are label edge routers (LERs). For example, the nodes 112 at the edges of the label switched network 110 are configured to insert or remove the labels of the packets transported between the label switched network 110 and external networks. The first node 112 and the last node 112 along a path are sometimes referred to as the source node or head end node and the destination node or tail end node, respectively. Although four nodes 112 are shown in the label switched network 110, the label switched network 110 may comprise any quantity of nodes 112. Additionally, the nodes 112 may be located in different domains in the label switched network 110 and may be configured to communicate across multiple domains. For example, the nodes 112 that correspond to different domains may exchange packets along a path that is established across multiple domains. The control plane controller 120 is any device configured to coordinate activities within the label switched network 110, such as a Network Management System (NMS) or Operations Support System (OSS). Specifically, the control plane controller 120 receives routing requests from the label switched network 110 and returns the corresponding path information. In addition, the control plane controller 120 communicates with the PCE 130, for instance using a PCEP, provides the PCE 130 with information used for path computation, receives the computed path from the PCE 130, and forwards the computed path to at least one of the nodes 112. The control plane controller 120 may be located in a component outside of the label switched network 110, such as an external server, or may be located in a component within the label switched network 110, such as a node 112.

The PCE 130 is any device configured to perform all or part of the path computation for the label switched network 110, e.g. based on a path computation request. Specifically, the PCE 130 receives the information that is used for computing a path from the control plane controller 120, from the node 112, or both. The PCE 130 then processes the information to obtain the path. For instance, the PCE 130 computes the path and determines the nodes 112 including the LSRs along the path. The PCE 130 may then send all or part of the computed path information to the control plane controller 120 or directly to at least one node 112. Further, the PCE 130 is typically coupled to or comprises a traffic-engineering database (TED), a P2MP Path database (PDB), a P2P path database, an optical performance monitor (OPM), a physical layer constraint (PLC) information database, or combinations thereof, which may be used to compute the path. The PCE 130 may be located in a component outside of the label switched network 110, such as an external server, or may be located in a component within the label switched network 110, such as a node 112.

A path computation request is sent to the PCE 130 by a PCC. The PCC is any client application requesting a path computation to be performed by the PCE 130. The PCC may also be any network component that makes such a request, such as the control plane controller 120, or any node 112, such as a LSR. For instance, the PCC requests from the PCE a P2MP path or P2P path in a single domain or across multiple domains in the label switched network 110. Additionally, the PCC may send the PCE 130 at least some of the path required information, for example via a PCEP path computation request and/or through broadcast signaling via link state advertisements (LSAs), etc.

Data packets transported between network nodes, such as the nodes 112, are referred to as label switched packets, and comprises labels that are used to switch the packets along the nodes of a computed path. A path computed or given and signaled by MPLS for transporting or routing the label switched packets is referred to as a LSP. For example, the LSP is a TE LSP established using a Resource Reservation Protocol-Traffic Engineering (RSVP-TE). The LSP may be a P2P TE LSP that extends from a source node to a destination node and is unidirectional, where the packets are transported in one direction along the path, e.g., from the source node to the destination node in the label switched network 110. Alternatively, the LSP may be a P2MP TE LSP, which extends from a source or root node to a plurality of destination or leaf nodes. The P2MP TE LSP may be considered as a combination of a plurality of P2P TE LSPs that share the same source node.

The description of the PCE and the PCC above are known to a person skilled in the art and does not limit the invention disclosed herein in any manner.

FIG. 2 is a schematic diagram of an example embodiment of a node 200 which may represent the PCE 130, a node 112 that may include a PCE and a PCC, as depicted in Fig. 1. In some embodiments, the node 200 may implement all or parts of the methods described below with respect to the PCE and the PCC disclosed herein. One skilled in the art will recognize that the term node 112 is included for purposes of clarity of discussion, but is in no way meant to limit the application of the present disclosure to a particular node. At least some of the features/methods described in the disclosure are implemented in a network node, apparatus, or component such as a node 200. For instance, the features/methods in the disclosure are implemented using hardware, firmware, and/or software installed to run on hardware. The node 200 may be any device that transports data, e.g., packets, frames, flows, and/or data streams, through a network, e.g., a switch, router, bridge, server, a client, etc. As shown in FIG. 2, the node 200 comprises transceivers (Tx/Rx) 210, which are transmitters, receivers, or combinations thereof. A Tx/Rx 210 is coupled to a plurality of downstream ports 220 for transmitting and/or receiving frames from other nodes, and a Tx/Rx 210 is coupled to a plurality of upstream ports 250 for transmitting and/or receiving frames from other nodes, respectively. A processor 230 is coupled to the Tx/Rx 210 to process the frames and/or determine which nodes to which to send frames. The processor 230 may comprise one or more multi-core processors and/or memory modules 240, which functions as data stores, buffers, etc. Processor 230 is implemented as a general processor or is part of one or more application specific integrated circuits (ASICs) and/or digital signal processors (DSPs). Processor 220 may comprises a PCE controller module (not shown), which is configured to provide PCE and SDN functionality and provide functionality to support the methods, computations, and/or communications as described herein. In an alternative embodiment, the PCE controller module (PCECC) is implemented as instructions stored in memory module 240, which are executed by processor 230. The memory module 240 comprises a cache for temporarily storing content, e.g., a Random Access Memory (RAM). Additionally, the memory module 240 comprises a long-term storage for storing content relatively longer, e.g., a Read Only Memory (ROM). For instance, the cache and the long-term storage includes dynamic random access memories (DRAMs), solid-state drives (SSDs), hard disks, or combinations thereof.

It is understood that by programming and/or loading executable instructions onto the node 200, at least one of the processor 230, the cache, and the long-term storage are changed, transforming the node 200 in part into a particular machine or apparatus, e.g., PCE which can instantiate SR policy independent of a candidate path in accordance with the functionality taught by the present disclosure. It is fundamental to the electrical engineering and software engineering arts that functionality that can be implemented by loading executable software into a computer can be converted to a hardware implementation by well-known design rules. Decisions between implementing a concept in software versus hardware typically hinge on considerations of stability of the design and numbers of units to be produced rather than any issues involved in translating from the software domain to the hardware domain. Generally, a design that is still subject to frequent change is preferred to be implemented in software, because re-spinning a hardware implementation is more expensive than re-spinning a software design. Generally, a design that is stable that will be produced in large volume is preferred to be implemented in hardware, for example in an ASIC, because for large production runs the hardware implementation is less expensive than the software implementation. Often a design is developed and tested in a software form and later transformed, by well-known design rules, to an equivalent hardware implementation in an ASIC that hardwires the instructions of the software. In the same manner as a machine controlled by a new ASIC is a particular machine or apparatus, likewise a computer that has been programmed and/or loaded with executable instructions is viewed as a particular machine or apparatus.

As discussed above with respect to Fig. 1 which illustrates an embodiment of a label switched network, the PCE may act as a central controller, referred to as PCECC. The PCE computes pathway control information for each of the nodes and communicates the computed pathway control information to each of the nodes. In some embodiments, the PCE communicates with each of the nodes via PCEP.

In accordance with the embodiments of the present invention, a path computation request is sent to the PCE by a PCC, wherein the PCC may be any client application requesting a path computation to be performed by the PCE. The PCC may also be any network component that makes such a request, such as any of the nodes illustrated in Fig. 1. The PCE computes the path (e.g. route), and determines the nodes (e.g. LSRs along the path) and sends all or part of the computed path information directly to each of the nodes along the pathway. In prior mechanism PCE initiated SR policy with a single candidate path or multiple candidate paths. During instantiation of one or more candidate paths on the PCC, the PCE needs to signal to a PCC <headend, color, end-point, originator, discriminator, preference> tuple using which the PCC can instantiate a candidate path for the SR policy identified. Thus, SR policy was always tied to the candidate paths.

In accordance with the present invention, SR policy can be created at the nodes independent of the candidate paths. In one implementation, the PCE which may act upon the instructions of a central controller, such as the Central Plane Controller in Fig 1, or act as the PCECC to create SR policy at the node(s), such as nodes 112 in Fig. 1, as a separate container. The PCE which acts as a PCECC may employ existing PCECC techniques to implement the claimed embodiments of the present invention. To this end, a new Central Controller Instruction (CCI) object type is proposed within the PCECC extensions that are to create SR policy in accordance with the teachings of the present disclosure. It is to be understood that each CCI is identified by a unique identifier, referred to as CC-ID, in PCEP. By way of an example, the Internet Draft, "PCEP Procedures and Protocol Extensions for Using PCE as a Central Controller (PCECC) of LSPs" defines a PCEP object, CCI for the encoding of the CCI limited to Label forwarding instructions which is known by its own CC-ID. In order to create SR policy independent of the candidate paths, the present invention discloses new CCI object-types for a CCI to create SR policy in such a manner which is independent of the candidate paths.

The CCI object-types for creation of the SR policy encodes the SR policy parameters called the Policy Identifiers and optional TLVs (Type-Length-Value) that carry the SR policy name. Policy Identifiers uniquely identify the SR policy to which a given LSP belongs, within the context of the head-end. Policy Identifiers consist of: Head-end of SR Policy, Color of SR policy, End-point of SR policy, and optionally, the policy name. The optional TLV used for the CCI object-types for creation of the SR policy is SRPOLICY-POL-NAME TLV. This is defined as:

SRPOLICY-POL-NAME TLV:

```
 0                   1                   2                   3
 0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-+
|                 T y p e               |             L e n g t h           |

+-+-+-+-+-+-+-+-+-+-+-+-+-+-+-+-+-+-+-+-+-+-+-+-+-+-+-+-+-+-+-+-+
|                                                               |
~                      P o l i c y   N a m e                    ~
|                                                               |
+-+-+-+-+-+-+-+-+-+-+-+-+-+-+-+-+-+-+-+-+-+-+-+-+-+-+-+-+-+-+-+-+
```

Where 'Type' represents the Association Type= TBD3 which the Type for as understood in the art. Further, the 'Length' total length of the TLV in octets and MUST be greater than 0. Policy Name: Policy name, as defined in [Internet Draft.ietf-spring-segment-routing-policy] .

Thus, the present invention proposes new CCI object-types with a CC-ID that is to create SR policy at the nodes independent of the candidate path. In context of the present disclosure, the CCI object with CC-ID (X), where X is for illustration purposes only, is used by the PCE to instantiate the creation of SR policy to the PCC, where the creation of the SR policy is independent of the candidate path. The new CCI object is also referred to as a new PCEP object and is defined as Object-Class Value and CCI Object Type. The CCI object may be carried within PCEP message as described in more detail below. The CCI object disclosed herein is thus defined as:

(1) CCI Object Type for SR Policy IPv4

```
    0             1             2             3
    0 1 2 3 4 5 6 7 8 9 0 1 2 3 4 5 6 7 8 9 0 1 2 3 4 5 6 7 8 9 0 1
   +-+-+-+-+-+-+-+-+-+-+-+-+-+-+-+-+-+-+-+-+-+-+-+-+-+-+-+-+-+-+-+-+
   |                       CC-ID                    |
   +-+-+-+-+-+-+-+-+-+-+-+-+-+-+-+-+-+-+-+-+-+-+-+-+-+-+-+-+-+-+-+-+
   |                 IPv4  Head-End                   |
   +-+-+-+-+-+-+-+-+-+-+-+-+-+-+-+-+-+-+-+-+-+-+-+-+-+-+-+-+-+-+-+-+
   |                     Color                 |
   +-+-+-+-+-+-+-+-+-+-+-+-+-+-+-+-+-+-+-+-+-+-+-+-+-+-+-+-+-+-+-+-+
   |                  IPv4  End-point              |
   +-+-+-+-+-+-+-+-+-+-+-+-+-+-+-+-+-+-+-+-+-+-+-+-+-+-+-+-+-+-+-+-+
   |                             |
   //                 Optional TLV              //
   |                             |
   +-+-+-+-+-+-+-+-+-+-+-+-+-+-+-+-+-+-+-+-+-+-+-+-+-+-+-+-+-+-+-+-+
```

(2) CCI Object Type for SR Policy IPv6

```
    0             1             2             3
    0 1 2 3 4 5 6 7 8 9 0 1 2 3 4 5 6 7 8 9 0 1 2 3 4 5 6 7 8 9 0 1
   +-+-+-+-+-+-+-+-+-+-+-+-+-+-+-+-+-+-+-+-+-+-+-+-+-+-+-+-+-+-+-+-+
   |                       CC-ID                 |
   +-+-+-+-+-+-+-+-+-+-+-+-+-+-+-+-+-+-+-+-+-+-+-+-+-+-+-+-+-+-+-+-+
   |                             |
   |                 IPv6  Head-End             |
   |                             |
   |                             |
   +-+-+-+-+-+-+-+-+-+-+-+-+-+-+-+-+-+-+-+-+-+-+-+-+-+-+-+-+-+-+-+-+
```

```
|                 Color                 |
+-+-+-+-+-+-+-+-+-+-+-+-+-+-+-+-+-+-+-+-+-+-+-+-+-+-+-+-+-+-+-+-+
|                                       |
|              IPv6  End-point          |
|                                       |
|                                       |
+-+-+-+-+-+-+-+-+-+-+-+-+-+-+-+-+-+-+-+-+-+-+-+-+-+-+-+-+-+-+-+-+
|                                       |
//              Optional TLV            //
|                                       |
+-+-+-+-+-+-+-+-+-+-+-+-+-+-+-+-+-+-+-+-+-+-+-+-+-+-+-+-+-+-+-+-+
```

Where two SR Policy CCI object-types, one for IPv4 and another for IPv6 are defined as:
Where CC-ID: A PCEP-specific identifier for the CCI information. A PCE creates a CC-ID for each instruction, the value is unique within the scope of the PCE and is constant for the lifetime of a PCEP session. The values 0 and 0xFFFFFFFF are reserved and MUST NOT be used. In the present disclosure, for illustration purposes the CC-ID is referred to as a value X. The 'Color' can be an unsigned 32 bit number and the 'Head-end' and 'Endpoint' are either IPv4 or IPv6 addresses based on the CCI Object-Type. Further, 'Head-end', 'Color' and 'End-Point' are the same as SR policy parameters. The optional TLV is used to encode the existing TLV as defined above: SRPOLICY-POL-NAME TLV.

As indicated above, the CCI object is carried in a PCEP message from the PCE to the PCC. The PCEP messages are already used for Central Controller Instructions and are defined in [RFC8281]. In context of the present disclosure, the existing messages that support the functions required by a PCECC may be defined as:

(1) PCInitiate (PCE initiate) message: herein referred to as the first PCEP message and is described in [RFC8281]
(2) PCRpt (PC report) message: herein referred to as the second PCEP message and is described in [RFC8231]
(3) PCUpd (PC update) message: herein referred to as the third PCEP message and is described in [RFC8231]

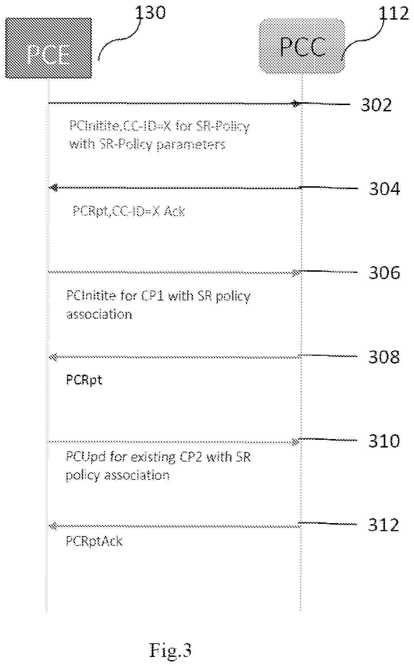

In accordance with the embodiments of the present invention, the first PCEP message, i.e., PCInitiate message, is used to carry the CCI with CC-ID (X) from the PCE to the PCC for creating the SR policy. The first PCEP message carries the CCI for creating SR policy independent of the candidate path. After the SR policy is created, the subsequent PCEP messages may be used to associate the SR policy to one or more candidate paths using an Association ID. Thereafter when a new candidate path is created only the Association ID may be exchanged in the PCEP messages without exchanging the SR policy parameters. It is important to understand here that the Internet draft "draft-ietf-pce-segment-routing-policy-cp-00" already defines the SR policy Association that allows for creation of candidate paths as subsets of a new or an existing SR policy. So, when a PCE wants to instantiate one or more candidate paths on the PCC, it needs to signal the SR policy parameters using which the PCC can instantiate a candidate path for the SR policy identified. However, the present invention does not require a SR policy to be mapped to the candidate paths by default and allows for creation of a SR policy as a container which can be later associated with one or more candidate paths using the Association ID that is chosen by the PCC when the SR policy thus created is to be allocated to those candidate paths. The Association parameters that uniquely identify the association between one or more candidate paths to the SR policy is already described in the Internet draft "draft-ietf-pce-segment-routing-policy-cp-00. To clearly distinguish for the candidate path instantiation disclosed in the Internet draft "draft-ietf-pce-segment-routing-policy-cp-00", and the SR policy instantiation independent of the candidate path disclosed in the present invention, reference shall now be made to Fig 3 which illustrates PCEP messages communicated between a PCE and PCC, where the PCE may be a PCE 130 shown in Fig. 1 and the PCC may be a node 112 shown in Fig. 1.

At step 302, PCE 130 sends a first PCEP initiate message, PCInitiate, to the PCC 112, where the first PCEP message carries the central controller instruction with CC-ID=X for creating a SR policy. The central control instructions may include the SR policy parameters. No candidate paths instantiation takes place in this step.

The PCC 112 receives the first PCEP initiate message from the PCE 130, creates the SR policy using the SR policy parameters where the SR policy is a container independent of any candidate path.

At step 304, the PCC 112 sends a first PCEP report message, PCRpt, to the PCE 130 to report the acknowledgement of the CC-ID=X and the newly created SR policy.

The steps 302 and step 304 are proposed in the present disclosure and are not present in the existing Internet Drafts as prior to this disclosure the creating of SR policy independent of the candidate path(s) was not known.

At step 306, the PCE 130 sends a second PCEP initiate message, PCInitiate, to the PCC 112. The second PCEP message is for creating a new candidate path (CP1) and includes an Association object for associating the candidate path to the created SR policy. The Association object includes the set of SR policy parameters and the SR Policy association identifier (Association ID) corresponding to the SR policy.

At step 308, the PCC 112 sends a second PCEP report message, PCRpt, back to the PCE 130 to report the newly created candidate path (CP1) and includes the Association ID corresponding to the SR policy.

Subsequently, when the candidate path (CP1) is to be updated or a deleted, only the Association ID is sent from the PCE 130 to the PCC 112 and the entire set of SR policy parameters or the TLVs are not required to be sent. Further, when a new candidate path (CP2) is to be created only the SR policy association, i.e., the Association ID, is sent without sending the entire set of SR policy parameters.

As illustrated in Fig. 3, at step 310, the PCE 130 sends a PCEP update message, PCUpd, to the PCC 112. Herein the update message is to update an existing candidate path (CP2). The PCEP update message includes the Association ID, referred to as SR policy association.

The illustration provided in Fig. 3 is only for providing clarity on the new CCI for creating SR policy independent of candidate paths, in comparison to existing Internet Drafts and does not limit the claimed invention in any manner. The concept of Association object and associating a new candidate path to a created SR Policy is known and therefore not discussed in detail henceforth.

The foregoing disclosure explains the embodiments of the present disclosure with the help of exemplary diagrams and one or more examples. However, such exemplary diagrams are provided for the illustration purpose for better understanding of the present disclosure and should not be construed as limitation on scope of the present disclosure.

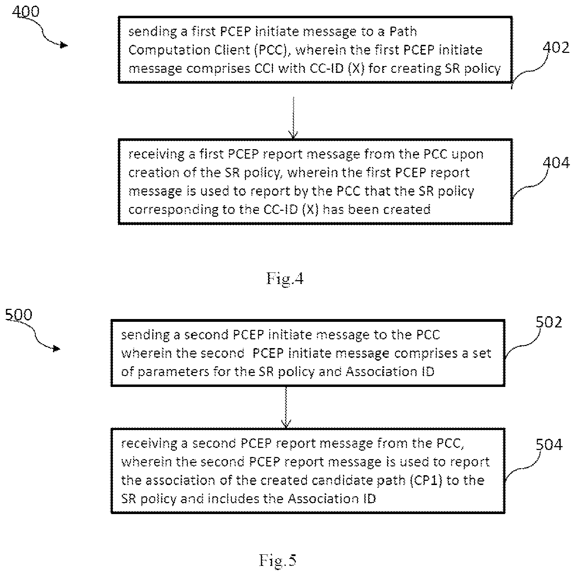

Fig. 4 illustrates a method 400 performed by a Path Computation Element (PCE) using a Path Computation Element Protocol (PCEP). The PCE herein may refer to a PCE 130 which may act upon the instructions of a Central Controller or act as a PCECC which has been discussed in Fig .1. The PCE may also be one of the nodes 112 acting upon the instructions of a central controller. In present embodiments, the PCE acts as a PCECC. In accordance with an embodiment of the present invention, the method 400 includes step 402 where the PCE sends a first PCEP initiate message to a PCC, which may be a node 112 as described in Fig .1 The first PCEP initiate message comprises a Central Controller Instruction (CCI) with a Central Controller Identifier (CC-ID) (X) for creating a Segment Routing (SR) policy. Herein the step 402 may be considered equivalent to step 302 illustrated in Fig 3 and described above. The CCI object for creating a SR policy independent of a candidate path and having a CC-ID=X has already been described and is not repeated herein. Further, the method 400 includes step 404 where the PCE receives a first PCEP report message from the PCC upon creation of the SR policy, wherein the first PCEP report message is used to report by the PCC that the SR policy corresponding to the CC-ID (X) has been created. Herein the step 404 may be considered equivalent to step 304 illustrated in Fig. 3 and described above. Upon creating the SR policy as a separate container one or more candidate paths may be associated to the SR policy already created. One of the key advantages of creating a SR policy as a separate container is that even when the candidate path(s) go down in a network, the SR policy necessarily is not deleted and is retained.

Further, Fig. 5 illustrates a method 500 of creating a candidate path (CP1) in accordance with an embodiment of the present invention where the SR policy has been previously created at the PCC, the method 500 being performed by the PCE referred to in Fig. 4. The method 500 includes a step 502 where the PCE sends to the PCC, a second PCEP initiate message to associate a candidate path (CP1) to the created SR policy, wherein the second PCEP initiate message includes a set of SR policy parameters and a SR Policy association identifier (Association ID) corresponding to the SR policy. Herein the step 502 can be considered equivalent to step 306 illustrated in Fig. 3 and described above. Further, the method includes step 504 where the PCE receives from the PCE a second PCEP report message wherein the second PCEP report message is used to report the association of the created candidate path (CP1) to the SR policy and the second PCEP report message includes the Association ID corresponding to the SR policy. The method of creating a candidate path initiated at the PCE is known from the teachings of the Internet Draft "draft-ietf-pce-segment-routing-policy-cp-00". Herein, the step 504 can be considered equivalent to step 308 illustrated in Fig. 3 and described above. It is important to note that the present disclosure is differentiated from said Internet Draft, as the SR policy is separate created in the method 400, and the candidate path is now created and associated to the SR policy through the Association ID. Whereas, in the prior solution the candidate path was created along with sharing the SR policy parameters and the PCE did not known whether the SR policy exists or has to be created. Thus, one of the key advantages of creating the SR policy as a separate container and then associating candidate path(s) does not require to process at the PCE whether the SR policy exists or has to be created.

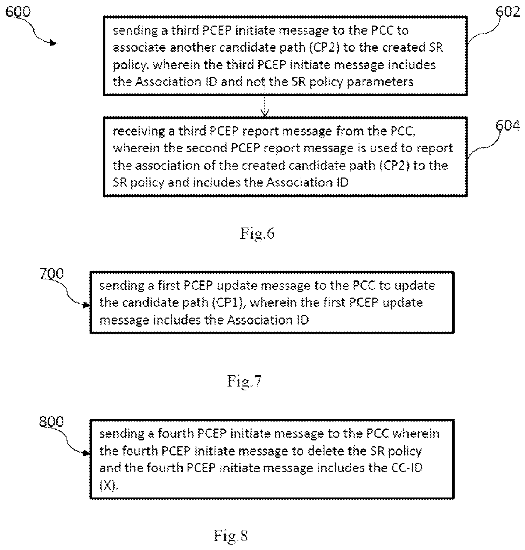

Further, Fig. 6 illustrates a method 600 of creating another candidate path (CP2) in accordance with an embodiment of the present invention where the SR policy has been previously created at the PCC, the method 600 being performed by the PCE referred to in Fig. 4 and Fig. 5. Also by saying another candidate path (CP2) it is assumed that previous candidate path (CP1) exists. Both, the previous candidate path (CP1) and the another candidate path (CP2) are for the same SR policy created as disclosed with respect to method 400 above. The method 600 includes at step 602 sending a third PCEP initiate message to the PCC to associate another candidate path (CP2) to the created SR policy, wherein the third PCEP initiate message includes the Association ID and not the SR policy parameters. The advantage associated with this step is that after the set of SR policy parameters are shared for a candidate path (CP 1) created for the first time and associated with the SR policy, they necessarily are not required to be shared again for the other candidate paths to be associated to the same SR policy. The Association ID is sent from the PCE to the PCC. The PCC uses the association ID to associate the candidate path (CP2) to the created SR policy. At step 604, the PCE receives a receiving a third PCEP report message from the PCC, wherein the second PCEP report message is used to report the association of the created candidate path (CP2) to the SR policy and includes the Association ID.

In a further embodiment, the above described methods 400 and 500 further include a method 700 to update an existing candidate path. An existing candidate path can be updated without sharing the set of SR policy parameters by sharing only the Association ID to the existing SR policy already created. At step 700, the PCE sends a PCEP update message includes sending a PCEP update message to the PCC to update the candidate path (CP1), wherein the PCEP update message includes the Association ID. Herein the method 700 can be considered equivalent to step 310 illustrated in Fig. 3 and described above. Likewise as shown in Fig.3, the method 700 may further include receiving an acknowledgement from the PCC (PCRpt) upon updating the candidate path with the SR policy association.

In accordance with a further embodiment of the present invention, the SR policy created, referred to the SR policy created by the disclosed method 400, can be deleted by sharing the CC-ID=X using a fourth PCEP initiate message (PCInitiate). Fig. 8 illustrates a method 800 performed by the PCE wherein the PCE sends sending a fourth PCEP initiate message to the PCC wherein the fourth PCEP initiate message to delete the SR policy and the fourth PCEP initiate message includes the CC-ID (X).

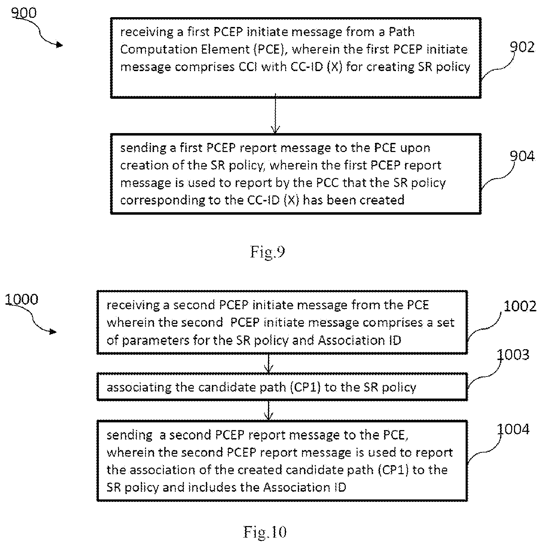

Fig. 9 illustrates a method 900 performed by a Path Computation Client (PCC) using a Path Computation Element Protocol (PCEP). The PCC herein may refer to a node 112 as discussed in Fig. 1. The PCC is in communication with a PCE which may act upon the instructions of a Central Controller or act as a PCECC which has been discussed in Fig .1. The PCE herein refers to the PCE that performs the methods 400, 500, 600, 700 and 800. In accordance with an embodiment of the present invention, the method 900 includes step 902 where the PCC receives a first PCEP initiate message from a PCE. The first PCEP initiate message comprises a Central Controller Instruction (CCI) with a Central Controller Identifier (CC-ID) (X) for creating a Segment Routing (SR) policy. Herein the step 902 may be considered equivalent to step 302 illustrated in Fig 3 and described above. The CCI object for creating a SR policy independent of a candidate path and having a CC-ID=X has already been described and is not repeated herein. Further, the method 900 includes step 904 where the PCC sends a first PCEP report message to the PCE upon creation of the SR policy, wherein the first PCEP report message is used to report by the PCC that the SR policy corresponding to the CC-ID (X) has been created. Herein the step 904 may be considered equivalent to step 304 illustrated in Fig. 3 and described above. Upon creating the SR policy as a separate container one or more candidate paths may be associated to the SR policy already created. One of the key advantages of creating a SR policy as a separate container is that even when the candidate path(s) go down in a network, the SR policy necessarily is not deleted and is retained.

Further, Fig. 10 illustrates a method 1000 of creating a candidate path (CP1) in accordance with an embodiment of the present invention where the SR policy has been previously created at the PCC, the method 1000 being performed by the PCC referred to in Fig. 9. The method 1000 includes a step 1002 where the PCC receives from the PCE, a second PCEP initiate message to associate a candidate path (CP1) to the created SR policy, wherein the second PCEP initiate message includes a set of SR policy parameters and a SR Policy association identifier (Association ID) corresponding to the SR policy. Herein the step 1002 can be considered equivalent to step 306 illustrated in Fig. 3 and described above. Further, the method includes a step 1003 where the PCC associates the candidate path (CP1) to the created SR policy. Further, the method includes step 1004 where the PCC sends to the PCE a second PCEP report message wherein the second PCEP report message is used to report the association of the created candidate path (CP1) to the SR policy and the second PCEP report message includes the Association ID corresponding to the SR policy. One of the key advantages of creating the SR policy as a separate container and then associating candidate path(s) does not require to process at the PCE whether the SR policy exists or has to be created.

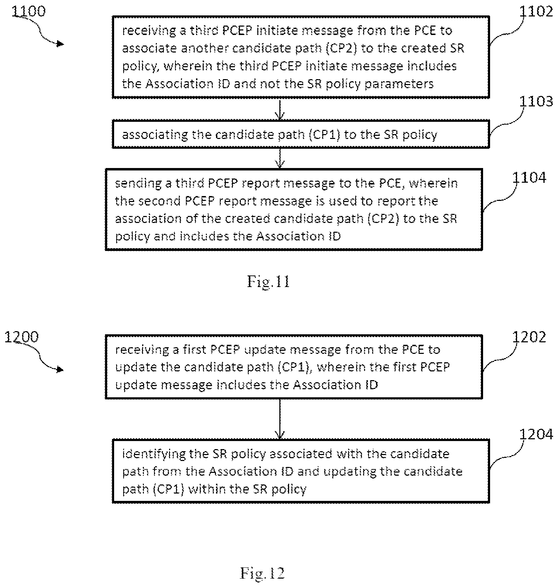

Further, Fig. 11 illustrates a method 1100 of creating another candidate path (CP2) in accordance with an embodiment of the present invention where the SR policy has been previously created at the PCC, the method 1100 being performed by the PCC referred to in Fig. 9 and Fig. 10. Also by saying another candidate path (CP2) it is assumed that previous candidate path (CP1) exists. Both, the previous candidate path (CP1) and the another candidate path (CP2) are for the same SR policy created as disclosed with respect to method 900 above. The method 1100 includes at step 1102 of receiving a third PCEP initiate message from the PCE to associate another candidate path (CP2) to the created SR policy, wherein the third PCEP initiate message includes the Association ID and not the SR policy parameters. The advantage associated with this step is that after the set of SR policy parameters are shared for a candidate path (CP1) created for the first time and associated with the SR policy, they necessarily are not required to be shared again for the other candidate paths to be associated to the same SR policy. The Association ID is sent from the PCE to the PCC. Further, the method includes a step 1103 where the PCC associates the another candidate path (CP2) to the created SR policy. The PCC uses the association ID to associate the candidate path (CP2) to the created SR policy. At step 1104, the PCC sends a third PCEP report message to the PCE, wherein the second PCEP report message is used to report the association of the created candidate path (CP2) to the SR policy and includes the Association ID.

In a further embodiment, the above described methods 900 and 1000 further include a method 1200 to update an existing candidate path. An existing candidate path can be updated without sharing the set of SR policy parameters by sharing only the Association ID to the existing SR policy already created. At step 1202, the PCC receives a PCEP update message from the PCE to update the candidate path (CP1), wherein the PCEP update message includes the Association ID. Herein the method 1202 can be considered equivalent to step 310 illustrated in Fig. 3 and described above. Likewise as shown in Fig.3, the method 1200 may further include sending an acknowledgement by the PCC (PCRpt) to the PCE upon updating the candidate path with the SR policy association. The illustrated method 1200 may also include at step 1204, identifying, by the PCC, the SR policy associated with the candidate path from the Association ID and updating the candidate path (CP1) within the SR policy.

In accordance with a further embodiment of the present invention, the SR policy created, referred to the SR policy created by the disclosed method 900, can be deleted by receiving the CC-ID=X using a fourth PCEP initiate message (PCInitiate) from the PCE. Fig. 1300 illustrates a method 1300 performed by the PCC wherein the PCC receives a fourth PCEP initiate message from the PCE wherein the fourth PCEP initiate message is to delete the SR policy and the fourth PCEP initiate message includes the CC-ID (X).

In addition to the above disclosed methods 400 and 900, performed by the PCE and the PCC respectively, both the PCE and the PCC must indicate its support of the function described in this disclosure, i.e., the ability to support creation of a SR policy independent of a candidate path. This is done, by advertising to each other a defined capability TLV in an OPEN object. The definition of such OPEN object is known in PCECC extensions and is not described in detail. Accordingly, the method performed by the PCE may include advertising to the PCC in an open PCEP message to indicate that the PCE supports CCI for creating SR policy independent of candidate path, wherein the advertising is prior to sending the first PCEP initiate message. Similarly, the method performed by the PCC may include advertising to the PCE in an open PCEP message to indicate that the PCC supports CCI for creating SR policy independent of candidate path, wherein the advertising is prior to receiving the first PCEP initiate message.

In accordance with a further embodiment of the present invention, the apparatus and the system to support CCI for creating an SR policy independent of a candidate path is disclosed in the present invention.

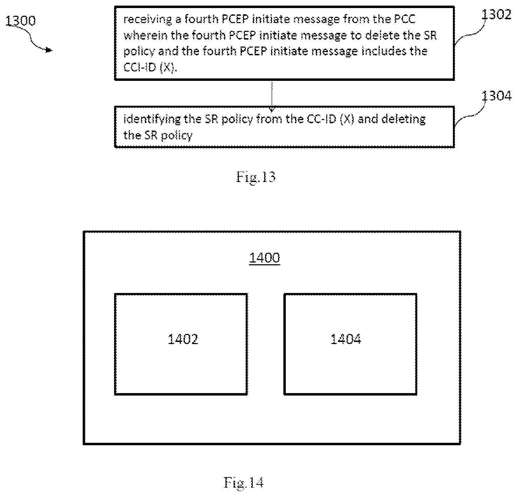

Referring now to Fig. 14, a Path Computation Element (PCE) 1400 that performs based on a Path Computation Element Protocol (PCEP) is illustrated, in accordance with an embodiment of the present disclosure. The PCE herein may refer to a PCE 130 which may act upon the instructions of a Central Controller or act as a PCECC which has been discussed in Fig .1. The PCE may also be one of the nodes 112 acting upon the instructions of a central controller. In present embodiments, the PCE acts as a PCECC. Although the present disclosure is explained considering that the elements shown in Fig. 14, it may be understood that the PCE 1400 may include the elements and the functionalities disclosed for a node 200 disclosed in Fig. 2. Further, it is understood from the present disclosure that the PCE 1400 communicates with a Path Computation Client (PCC) using PCEP. The PCE 1400 includes a memory 1402 and a transceiver 1402. For sake of clarity and to distinguish the elements of the PCE 1400 from that of the PCC in the present disclosure, the memory 1402 shall be hereinafter referred to as the first memory 1402 and the transceiver 1402 shall be hereinafter referred to as the first transceiver 1404. Similarly, the PCE 1400 may include a processor (not shown in Fig. 14), as shown for the node 200 in Fig.2, which may be referred to as the first processor. It should be understood that the first memory 1402 and the first transceiver 1404 may be considered the same as the memory 240 and the transceiver 210 respectively, as explained above with respect to the node 200 of Fig 2. In accordance with the present embodiment, the PCE 1400 is configured to perform the methods 400, 500, 600, 700 and 800 described above. To this end, the first memory 1402 is configured to store a PCEP object for a Central Controller Instruction (CCI) with a Central Controller Identifier (CC-ID) (X) for creating a Segment Routing (SR) policy. Further, the first transceiver 1404 is configured to sends a first PCEP initiate message to a PCC, which may be a node 112 as described in Fig .1 The first PCEP initiate message comprises the CCI) with the CC-ID (X) for creating a Segment Routing (SR) policy, and a set of parameters for the SR policy. Further, the transceiver 1404 is configured to receive a first PCEP report message from the PCC upon creation of the SR policy, wherein the first PCEP report message is used to report by the PCC that the SR policy corresponding to the CC-ID (X) and the set of SR policy parameters has been created. Thus, the PCE is distinguished from the prior art as it supports creation of a SR policy independent of a candidate path. One of the key advantages of creating a SR policy as a separate container is that even when the candidate path(s) go down in a network, the SR policy necessarily is not deleted and is retained.

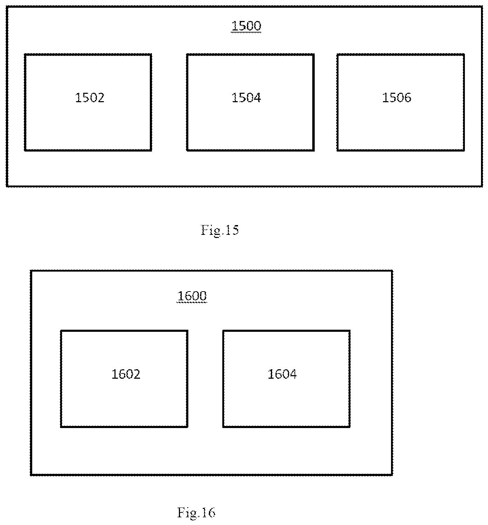

Further, the first transceiver 1404 is configured to perform the functionalities disclosed with respect to the methods 500-800 disclosed in detail above and therefore the same is not repeated herein. The corresponding PCC which creates the SR policy upon instantiation by the PCE 1400 is illustrated in Fig. 15.

Referring now to Fig. 15, a Path Computation Client (PCC) 1500 that performs based on a Path Computation Element Protocol (PCEP) is illustrated, in accordance with an embodiment of the present disclosure. The PCC herein may refer to a node 112 which has been discussed in Fig .1. Although the present disclosure is explained considering that the elements shown in Fig. 15, it may be understood that the PCC 1500 may include the elements and the functionalities disclosed for a node 200 disclosed in Fig. 2. Further, it is understood from the present disclosure that the PCE 1500 communicates with the PCE 1400 using PCEP. The PCE 1500 includes a second memory 1502, a second transceiver 1504 and a second processor 1506. The phrase 'second' used for the elements of PCC 1500 is for the sake of clarity and to distinguish the elements of the PCC 1500 from that of PCE 1400 in the present disclosure. It should be understood that the second memory 1502, the second transceiver 1504, and the second processor 1506 may be considered the same as the memory 240, the transceiver 210 and the processor 230 respectively, as explained above with respect to the node 200 of Fig 2. In accordance with the present embodiment, the PCE 1500 is configured to perform the methods 900, 1000, 1100, 1200 and 1300 described above. To this end, the second memory 1502 is configured to store a first list and a second list. The first list includes one or more segment routing (SR) policies created at the PCC independent of the candidate paths and the second list includes a one or more candidate paths and a respective SR policy Association Identifier for each of the one or more candidate paths, the SR policy Association Identifier corresponding to a SR policy in the first list. Further, the second transceiver 1504 is configured to receive a first PCEP initiate message from the PCE 1400 wherein the first PCEP initiate message comprises a Central Controller Instruction (CCI) with a Central Controller Identifier (CC-ID) (X) for creating a Segment Routing (SR) policy and a set of parameters for the SR policy. Further, the second processor 1506 is configured to create the SR policy and store the SR policy in the first list. Upon creation of the SR policy, the second transceiver 1504 is configured to sends a first PCEP report message to the PCE, wherein the first PCEP report message is used to report by the PCC that the SR policy corresponding to the CC-ID (X) and the set of SR policy parameters has been created. Thus, the PCC is distinguished from the prior art as it supports creation of a SR policy independent of a candidate path. One of the key advantages of creating a SR policy as a separate container is that even when the candidate path(s) go down in a network, the SR policy necessarily is not deleted and is retained.

Further, the second transceiver 1504 is configured to perform the functionalities disclosed with respect to the methods 1000-1300 disclosed in detail above and therefore the same is not repeated herein. Upon receipt of the second PCEP initiate message at the PCC, the second processor 1506 is configured to associate the candidate path (CP1) with the Association ID in the second list. Further, upon receipt of the PCEP update message at the PCC, the second processor 1506 is configured to identify the SR policy associated with the candidate path from the Association ID and update the candidate path (CP1) within the SR policy. Further, upon receipt of the third PCEP initiate message the sending processor 1506 is configured to associate the candidate path (CP2) with the Association ID in the second list. Further, upon receipt of the fourth PCEP initiate message at the PCC, the second processor 1506 is configured to delete the SR policy from the first list. Further, upon receipt of the third PCEP initiate message the second processor 1506 is configured to associate the candidate path (CP2) with the Association ID in the second list.

In accordance with yet another embodiment, a system 1600 comprising a PCE 1602 and a PCC 1604 in communication with each other using PCEP is disclosed. In one implementation, the PCE 1602 includes the PCE 1400 disclosed with respect to Fig. 14 and the PCC 1604 includes the PCC 1500 disclosed with respect to Fig. 15. In another implementation the PCE 1602 and the PCC 1604 includes the node 200 disclosed with respect to Fig. 2. In yet another implementation the PCE 1602 includes the PCE 130 disclosed with respect to Fig. 1 and the PCC includes a node 112 disclosed with respect to Fig. 1. According to the present embodiment, the system 1600 implements the method disclosed in Fig. 3 which enables creation of the SR policy independent of a candidate path using PCEP extensions. The functionalities of the PCE 1602 are already defined with respect to PCE 1400 and the functionalities of the PCC 1604 are already defined with respect to PCC 1500. For example, the PCE 1602 includes a first memory 1402 that is configured to store a PCEP object for a Central Controller Instruction (CCI) with a Central Controller Identifier (CC-ID) (X) for creating a Segment Routing (SR) policy. Further, the PCE includes a first transceiver that is configured to sends a first PCEP initiate message to the PCC 1604. The first PCEP initiate message comprises the CCI with the CC-ID (X) for creating a Segment Routing (SR) policy, and a set of parameters for the SR policy. Further, the first transceiver is configured to receive a first PCEP report message from the PCC 1604 upon creation of the SR policy, wherein the first PCEP report message is used to report by the PCC that the SR policy corresponding to the CC-ID (X) and the set of SR policy parameters has been created. The PCC 1604 comprises a second memory and a second transceiver. The second memory is configured to store a first list and a second list. The first list includes one or more segment routing (SR) policies created at the PCC independent of the candidate paths and the second list includes a one or more candidate paths and a respective SR policy Association Identifier for each of the one or more candidate paths, the SR policy Association Identifier corresponding to a SR policy in the first list. Further, the second transceiver is configured to receive the first PCEP initiate message from the PCE 1602 and to send the first PCEP report message to the PCE upon creation of the SR policy and to send the first PCEP report message to the PCE upon creation of the SR policy. The PCC 1604 also includes a second processor configured to create the SR policy and store the SR policy in the first list. Thus, the system 1600 including the PCE 1602 and the PCC 1604 distinguished from the prior art as it supports creation of a SR policy independent of a candidate path. One of the key advantages of creating a SR policy as a separate container is that even when the candidate path(s) go down in a network, the SR policy necessarily is not deleted and is retained.

In accordance with the further embodiment, the first transceiver of the PCE 1602 is configured to perform the functionalities disclosed with respect to the first transceiver 1404 of the PCE 1400. Further, the second transceiver and the second processor are configured to perform the functionalities of the second transceiver 1504 and the second processor 1506, respectively, of the PCC 1500.

It may be clearly understood by a person skilled in the art that for the purpose of convenient and brief description, for a detailed working process of the foregoing system, apparatus, and unit, reference may be made to a corresponding process in the foregoing method embodiments, and details are not described herein again.

While several embodiments have been provided in the present disclosure, it should be understood that the disclosed systems and methods might be embodied in many other specific forms without departing from the scope of the present disclosure. The present examples are to be considered as illustrative and not restrictive, and the intention is not to be limited to the details given herein. For example, the various elements or components may be combined or integrated in another system or certain features may be omitted, or not implemented.

In addition, techniques, systems, subsystems, and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component whether electrically, mechanically, or otherwise. Other examples of changes, substitutions, and alterations are ascertainable by one skilled in the art and could be made without departing from the Scope disclosed herein.

Accordingly, the scope of protection is not limited by the description set out above but is defined by the claims that follow. Each and every claim is incorporated as further disclosure into the specification and the claims are embodiment(s) of the present disclosure. The discussion of a reference in the disclosure is not an admission that it is prior art, especially any reference that has a publication date after the priority date of this application.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the disclosure of the embodiments of the invention is intended to be illustrative, but not limiting, of the scope of the invention, which is set forth in the following claims.

**Claims**

1. A method performed by a Path Computation Element, PCE, using a Path Computation Element Protocol, PCEP, comprising:

   advertising to a Path Computation Client PCC in an open PCEP message to indicate that the PCE supports a Central Controller Instruction, CCI, for creating a Segment Routing, SR, policy independent of a candidate path, sending (402) a first PCEP initiate message to the PCC, wherein the first PCEP initiate message comprises: the CCI with a Central Controller Identifier, CC-ID, for creating the SR policy;
   receiving (404) a first PCEP report message from the PCC upon creation of the SR policy, wherein the first PCEP report message is used to report by the PCC that the SR policy corresponding to the CC-ID has been created.

2. The method as claimed in claim 1 further comprising:

   sending (502) a second PCEP initiate message to the PCC to associate a candidate path to the created SR policy, wherein the second PCEP initiate message includes a set of SR policy parameters and a SR Policy association identifier corresponding to the SR policy;
   receiving (504) a second PCEP report message from the PCC, wherein the second PCEP report message is used to report association of the created candidate path to the SR policy and the second PCEP report message includes the Association ID corresponding to the SR policy.

3. The method as claimed in claim 2 comprising sending a PCEP update message to the PCC to update the candidate path, wherein the PCEP update message includes the Association ID.

4. The method as claimed in claim 2 comprising:

   sending (602) a third PCEP initiate message to the PCC to associate another candidate path to the created SR policy, wherein the third PCEP initiate message includes the Association ID and not the SR policy parameters;
   receiving (604) a third PCEP report message from the PCC, wherein the third PCEP report message is used to report association of the created candidate path to the SR policy and the third PCEP report message includes the Association ID corresponding to the SR policy.

5. The method as claimed in claim 1 comprising:
sending a fourth PCEP initiate message to the PCC wherein the fourth PCEP initiate message to delete the SR policy and the fourth PCEP initiate message includes the CC-ID.

6. The method as claimed in claim 1 wherein the first PCEP initiate message includes a Color field, a Head-end field and an End Point field which are SR policy parameters, the Color field being an unsigned 32 bit number, the Head-end field and the End Point field respectively being IPv4 addresses or IPv6 addresses based on the CCI Object-Type; and an Optional TLV corresponds to information used to encode 'SRPOLICY-POL-NAME TLV' defining a name of the SR policy.

7. The method as claimed in claim 1 wherein the PCE acts as a PCE Central Controller, PCECC.

8. A method performed by a Path Computation Client, PCC, using a Path Computation Element Protocol, PCEP, comprising:

receiving advertising from a Path Computation Element, PCE, in an open PCEP message to indicate that the PCE supports a Central Controller Instruction, CCI, for creating a Segment Routing, SR, policy independent of a candidate path,
receiving (902) a first PCEP initiate message from the PCE wherein the first PCEP initiate message received from the PCE comprises: the CCI with a Central Controller Identifier, CC-ID, for creating the SR policy;
sending (904) a first PCEP report message to the PCE upon creation of the SR policy, wherein the first PCEP report message is used to report by the PCC that the SR policy corresponding to the CC-ID has been created.

9. The method as claimed in claim 8 further comprising:
receiving (1002) a second PCEP initiate message from the PCE to associate a candidate path to the created SR policy, wherein the second PCEP initiate message includes a set of SR policy parameters and a SR Policy association identifier, Association ID, corresponding to the SR policy:

associating (1003) the candidate path to the created SR policy;
sending (1004) a second PCEP report message to the PCE, wherein the second PCEP report message is used to report tassociation of the created candidate path to the SR policy and the second PCEP report message includes the Association ID corresponding to the SR policy.

10. The method as claimed in claim 9 comprising:

receiving a PCEP update message from the PCE to update the candidate path, wherein the PCEP update message includes the Association ID; and
identifying the SR policy associated with the candidate path from the Association ID and updating the candidate path within the SR policy.

11. The method as claimed in claim 9 comprising:

receiving (1102) a third PCEP initiate message from the PCE to associate another candidate path to the created SR policy, wherein the third PCEP initiate message includes the Association ID and not the SR policy parameters;
associating (1103) the another candidate path to the created SR policy;
sending (1104) a third PCEP report message to the PCE, wherein the third PCEP report message is used to report association of the created candidate path to the SR policy and the third PCEP report message includes the Association ID corresponding to the SR policy.

12. The method as claimed in claim 8 comprising:

receiving a fourth PCEP initiate message from the PCE wherein the fourth PCEP initiate message to delete the SR policy and the fourth PCEP initiate message includes the CC-ID;
identifying the SR policy from the CC-ID and deleting the SR policy.

13. A Path Computation Element, PCE, using a Path Computation Element Protocol, PCEP, wherein the PCE is configured to perform the method according to any one of the claims 1 to 7.

14. A Path Computation Client using a Path Computation Element Protocol, PCEP, wherein the PCC is configured to perform the method according to any one of the claims 8 to 12.

**Patentansprüche**

1. Verfahren, das durch ein Pfadberechnungselement, PCE, unter Verwendung eines Pfadberechnungselementprotokolls, PCEP, durchgeführt wird, umfassend:

Bekanntmachen für einen Pfadberechnungsclient, PCC, in einer offenen PCEP-Nachricht, um anzugeben, dass das PCE eine Zentralsteuerungsanweisung, CCI, zum Erzeugen einer Segmentrouting-Richtlinie, SR-Richtlinie, unabhängig von einem in Frage kommenden Pfad unterstützt,
Senden (402) einer ersten PCEP-Initiierungsnachricht an den PCC, wobei die erste PCEP-Initiierungsnachricht Folgendes umfasst:

die CCI mit einer Zentralsteuerungskennung, CC-ID, zum Erzeugen der SR-Richtlinie;
Empfangen (404) einer ersten PCEP-Meldenachricht von dem PCC bei der Erzeugung der SR-Richtlinie, wobei die erste PCEP-Meldenachricht verwendet wird, um durch den PCC zu melden, dass die SR-Richtlinie, die der CC-ID entspricht, erzeugt worden ist.

2. Verfahren nach Anspruch 1, ferner umfassend:

Senden (502) einer zweiten PCEP-Initiierungsnachricht an den PCC, um der erzeugten SR-Richtlinie einen in Frage kommenden Pfad zuzuordnen, wobei die zweite PCEP-Initiierungsnachricht einen Satz von SR-Richtlinienparametern und eine SR-Richtlinienzuordnungskennung, die der SR-Richtlinie entspricht, beinhaltet;
Empfangen (504) einer zweiten PCEP-Meldenachricht von dem PCC, wobei die zweite PCEP-Meldenachricht verwendet wird, um eine Zuordnung des erzeugten in Frage kommenden Pfads zu der SR-Richtlinie zu melden, und die zweite PCEP-Meldenachricht die Zuordnungs-ID, die der SR-Richtlinie entspricht, beinhaltet.

3. Verfahren nach Anspruch 2, umfassend Senden einer PCEP-Aktualisierungsnachricht an den PCC, um den in Frage kommenden Pfad zu aktualisieren, wobei die PCEP-Aktualisierungsnachricht die Zuordnungs-ID beinhaltet.

4. Verfahren nach Anspruch 2, umfassend:

Senden (602) einer dritten PCEP-Initiierungsnachricht an den PCC, um der erzeugten SR-Richtlinie einen anderen in Frage kommenden Pfad zuzuordnen, wobei die dritte PCEP-Initiierungsnachricht die Zuordnungs-ID und nicht die SR-Richtlinienparameter beinhaltet;
Empfangen (604) einer dritten PCEP-Meldenachricht von dem PCC, wobei die dritte PCEP-Meldenachricht verwendet wird, um eine Zuordnung des erzeugten in Frage kommenden Pfads zu der SR-Richtlinie zu melden, und die dritte PCEP-Meldenachricht die Zuordnungs-ID, die der SR-Richtlinie entspricht, beinhaltet.

5. Verfahren nach Anspruch 1, umfassend:
Senden einer vierten PCEP-Initiierungsnachricht an den PCC, wobei die vierte PCEP-Initiierungsnachricht zum Löschen der SR-Richtlinie dient und die vierte PCEP-Initiierungsnachricht die CC-ID beinhaltet.

6. Verfahren nach Anspruch 1, wobei die erste PCEP-Initiierungsnachricht ein Farbfeld, ein Headend-Feld und ein Endpunktfeld, die SR-Richtlinienparameter sind, beinhaltet, wobei das Farbfeld eine vorzeichenlose 32-Bit-Zahl ist und das Headend-Feld und das Endpunktfeld jeweils IPv4-Adressen oder IPv6-Adressen basierend auf dem CCI-Objekttyp sind; und
ein optionaler TLV den Informationen entspricht, die zum Kodieren von "SRPOLICY-POL-NAME TLV" verwendet werden, der einen Namen der SR-Richtlinie definiert.

7. Verfahren nach Anspruch 1, wobei das PCE als eine PCE-Zentralsteuerung, PCECC, fungiert.

8. Verfahren, das durch einen Pfadberechnungsclient, PCC, unter Verwendung eines Pfadberechnungselementprotokolls, PCEP, durchgeführt wird, umfassend:

Empfangen einer Bekanntmachung von einem Pfadberechnungselement, PCE, in einer offenen PCEP-Nachricht, um anzugeben, dass das PCE eine Zentralsteuerungsanweisung, CCI, zum Erzeugen einer Segmentrouting-Richtlinie, SR-Richtlinie, unabhängig von einem in Frage kommenden Pfad unterstützt.

Empfangen (902) einer ersten PCEP-Initiierungsnachricht von dem PCE, wobei die erste PCEP-Initiierungsnachricht, die von dem PCE empfangen wird, Folgendes umfasst:

die CCI mit einer Zentralsteuerungskennung, CC-ID, zum Erzeugen der SR-Richtlinie;

Senden (904) einer ersten PCEP-Meldenachricht an das PCE bei der Erzeugung der SR-Richtlinie, wobei die erste PCEP-Meldenachricht verwendet wird, um durch den PCC zu melden, dass die SR-Richtlinie, die der CC-ID entspricht, erzeugt worden ist.

9. Verfahren nach Anspruch 8, ferner umfassend:

Empfangen (1002) einer zweiten PCEP-Initiierungsnachricht von dem PCE, um der erzeugten SR-Richtlinie einen in Frage kommenden Pfad zuzuordnen, wobei die zweite PCEP-Initiierungsnachricht einen Satz von SR-Richtlinienparametern und eine SR-Richtlinienzuordnungskennung, Zuordnungs-ID, die der SR-Richtlinie entspricht, beinhaltet;

Zuordnen (1003) des in Frage kommenden Pfads zu der erzeugten SR-Richtlinie;

Senden (1004) einer zweiten PCEP-Meldenachricht an das PCE, wobei die zweite PCEP-Meldenachricht verwendet wird, um eine Zuordnung des erzeugten in Frage kommenden Pfads zu der SR-Richtlinie zu melden, und die zweite PCEP-Meldenachricht die Zuordnungs-ID, die der SR-Richtlinie entspricht, beinhaltet.

10. Verfahren nach Anspruch 9, umfassend:

Empfangen einer PCEP-Aktualisierungsnachricht von dem PCE, um den in Frage kommenden Pfad zu aktualisieren, wobei die PCEP-Aktualisierungsnachricht die Zuordnungs-ID beinhaltet; und

Identifizieren der SR-Richtlinie, die dem in Frage kommenden Pfad zugeordnet ist, aus der Zuordnungs-ID und Aktualisieren des in Frage kommenden Pfads innerhalb der SR-Richtlinie.

11. Verfahren nach Anspruch 9, umfassend:

Empfangen (1102) einer dritten PCEP-Initiierungsnachricht von dem PCE, um der erzeugten SR-Richtlinie einen anderen in Frage kommenden Pfad zuzuordnen, wobei die dritte PCEP-Initiierungsnachricht die Zuordnungs-ID und nicht die SR-Richtlinienparameter beinhaltet;

Zuordnen (1103) des anderen in Frage kommenden Pfads zu der erzeugten SR-Richtlinie;

Senden (1104) einer dritten PCEP-Meldenachricht an das PCE, wobei die dritte PCEP-Meldenachricht verwendet wird, um eine Zuordnung des erzeugten in Frage kommenden Pfads zu der SR-Richtlinie zu melden, und die dritte PCEP-Meldenachricht die Zuordnungs-ID, die der SR-Richtlinie entspricht, beinhaltet.

12. Verfahren nach Anspruch 8, umfassend:

Empfangen einer vierten PCEP-Initiierungsnachricht von dem PCE, wobei die vierte PCEP-Initiierungsnachricht zum Löschen der SR-Richtlinie dient und die vierte PCEP-Initiierungsnachricht die CC-ID beinhaltet;

Identifizieren der SR-Richtlinie aus der CC-ID und Löschen der SR-Richtlinie.

13. Pfadberechnungselement, PCE, das ein Pfadberechnungselementprotokoll, PCEP, verwendet, wobei das PCE dazu konfiguriert ist, das Verfahren nach einem der Ansprüche 1 bis 7 durchzuführen.

14. Pfadberechnungsclient, der ein Pfadberechnungselementprotokoll, PCEP, verwendet, wobei der PCC dazu konfiguriert ist, das Verfahren nach einem der Ansprüche 8 bis 12 durchzuführen.

**Revendications**

1. Procédé exécuté par un élément de calcul de trajet, PCE, utilisant un protocole d'élément de calcul de trajet, PCEP, comprenant :
la publicité adressée à un client de calcul de trajet PCC dans un message PCEP ouvert pour indiquer que le PCE prend en charge une instruction de dispositif de commande central, CCI, pour créer une politique de routage de segment, SR, indépendante d'un trajet candidat, l'envoi (402) d'un premier message d'initiation PCEP au PCC, dans lequel le premier message d'initiation PCEP comprend :

le CCI avec un identifiant de dispositif de commande central, CC-ID, pour créer la politique SR ;
la réception (404) d'un premier message de rapport PCEP du PCC lors de la création de la politique SR, dans lequel le premier message de rapport PCEP est utilisé pour signaler par le PCC que la politique SR correspondant au CC-ID a été créée.

2. Procédé selon la revendication 1, comprenant également :
l'envoi (502) d'un deuxième message d'initiation PCEP au PCC pour associer un trajet candidat à la politique SR créée, dans lequel le deuxième message d'initiation PCEP comporte un ensemble de paramètres de politique SR et un identifiant d'association de politique SR correspondant à la politique SR ; la réception (504) d'un deuxième message de rapport PCEP du PCC, dans lequel le deuxième message de rapport PCEP est utilisé pour signaler l'association du trajet candidat créé à la politique SR et le deuxième message de rapport PCEP comporte l'ID d'association correspondant à la politique SR.

3. Procédé selon la revendication 2 comprenant l'envoi d'un message de mise à jour PCEP au PCC pour mettre à jour le trajet candidat, dans lequel le message de mise à jour PCEP comporte l'ID d'association.

4. Procédé selon la revendication 2 comprenant :

l'envoi (602) d'un troisième message d'initiation PCEP au PCC pour associer un autre trajet candidat à la politique SR créée, dans lequel le troisième message d'initiation PCEP comporte l'ID d'association et non les paramètres de politique SR ;
la réception (604) d'un troisième message de rapport PCEP du PCC, dans lequel le troisième message de rapport PCEP est utilisé pour signaler l'association du trajet candidat créé à la politique SR et le troisième message de rapport PCEP comporte l'ID d'association correspondant à la politique SR.

5. Procédé selon la revendication 1 comprenant :
l'envoi d'un quatrième message d'initiation PCEP au PCC dans lequel le quatrième message d'initiation PCEP supprime la politique SR et le quatrième message d'initiation PCEP comporte le CC-ID.

6. Procédé selon la revendication 1, dans lequel le premier message d'initiation PCEP comporte un champ Couleur, un champ Tête de réseau et un champ Point de terminaison qui sont des paramètres de politique SR, le champ Couleur étant un nombre non signé de 32 bits, le champ Tête de réseau et le champ Point de terminaison étant respectivement des adresses IPv4 ou des adresses IPv6 basées sur le type d'objet CCI ; et
un TLV facultatif correspond aux informations utilisées pour encoder « SRPOLICY-POL-NAME TLV » définissant un nom de la politique SR.

7. Procédé selon la revendication 1, dans lequel le PCE agit en tant que dispositif de commande central de PCE, PCECC.

8. Procédé exécuté par un client de calcul de trajet, PCC, utilisant un protocole d'élément de calcul de trajet, PCEP, comprenant :

la réception de la publicité d'un élément de calcul de trajet, PCE, dans un message PCEP ouvert pour indiquer que le PCE prend en charge une instruction de dispositif de commande central, CCI, pour créer une politique de routage de segment, SR, indépendante d'un trajet candidat,
la réception (902) d'un premier message d'initiation PCEP provenant du PCE, dans lequel le premier message d'initiation PCEP reçu du PCE comprend :

le CCI avec un identifiant de dispositif de commande central, CC-ID, pour créer la politique SR ;
l'envoi (904) d'un premier message de rapport PCEP au PCE lors de la création de la politique SR, dans lequel le premier message de rapport PCEP est utilisé pour signaler par le PCC que la politique SR correspondant au CC-ID a été créée.

9. Procédé selon la revendication 8, comprenant également :

la réception (1002) d'un deuxième message d'initiation PCEP du PCE pour associer un trajet candidat à la politique SR créée, dans lequel le deuxième message d'initiation PCEP comporte un ensemble de paramètres de politique SR et un identifiant d'association de politique SR, ID d'association, correspondant à la politique SR ;

l'association (1003) du trajet candidat à la politique SR créée ;

l'envoi (1004) d'un deuxième message de rapport PCEP au PCE, dans lequel le deuxième message de rapport PCEP est utilisé pour signaler l'association du trajet candidat créé à la politique SR et le deuxième message de rapport PCEP comporte l'ID d'association correspondant à la politique SR.

10. Procédé selon la revendication 9 comprenant :

la réception d'un message de mise à jour PCEP du PCE pour mettre à jour le trajet candidat, dans lequel le message de mise à jour PCEP comporte l'ID d'association ; et

l'identification de la politique SR associée au trajet candidat à partir de l'ID d'association et la mise à jour du trajet candidat dans la politique SR.

11. Procédé selon la revendication 9 comprenant :

la réception (1102) d'un troisième message d'initiation PCEP du PCE pour associer un autre trajet candidat à la politique SR créée, dans lequel le troisième message d'initiation PCEP comporte l'ID d'association et non les paramètres de politique SR ;

l'association (1103) de l'autre trajet candidat à la politique SR créée ;

l'envoi (1104) d'un troisième message de rapport PCEP au PCE, dans lequel le troisième message de rapport PCEP est utilisé pour signaler l'association du trajet candidat créé à la politique SR et le troisième message de rapport PCEP comporte l'ID d'association correspondant à la politique SR.

12. Procédé selon la revendication 8 comprenant :

la réception d'un quatrième message d'initiation PCEP du PCE dans lequel le quatrième message d'initiation PCEP supprime la politique SR et le quatrième message d'initiation PCEP comporte le CC-ID ;

l'identification de la politique SR provenant du CC-ID et la suppression de la politique SR.

13. Élément de calcul de trajet, PCE, utilisant un protocole d'élément de calcul de trajet, PCEP, dans lequel le PCE est configuré pour exécuter le procédé selon l'une quelconque des revendications 1 à 7.

14. Client de calcul de trajet utilisant un protocole d'élément de calcul de trajet, PCEP, dans lequel le PCC est configuré pour exécuter le procédé selon l'une quelconque des revendications 8 à 12.

Fig. 1

Fig. 2

Fig.3

400

| sending a first PCEP initiate message to a Path Computation Client (PCC), wherein the first PCEP initiate message comprises CCI with CC-ID (X) for creating SR policy | 402 |

| receiving a first PCEP report message from the PCC upon creation of the SR policy, wherein the first PCEP report message is used to report by the PCC that the SR policy corresponding to the CC-ID (X) has been created | 404 |

Fig.4

500

| sending a second PCEP initiate message to the PCC wherein the second PCEP initiate message comprises a set of parameters for the SR policy and Association ID | 502 |

| receiving a second PCEP report message from the PCC, wherein the second PCEP report message is used to report the association of the created candidate path (CP1) to the SR policy and includes the Association ID | 504 |

Fig.5

600

602

sending a third PCEP initiate message to the PCC to associate another candidate path (CP2) to the created SR policy, wherein the third PCEP initiate message includes the Association ID and not the SR policy parameters

604

receiving a third PCEP report message from the PCC, wherein the second PCEP report message is used to report the association of the created candidate path (CP2) to the SR policy and includes the Association ID

Fig.6

700

sending a first PCEP update message to the PCC to update the candidate path (CP1), wherein the first PCEP update message includes the Association ID

Fig.7

800

sending a fourth PCEP initiate message to the PCC wherein the fourth PCEP initiate message to delete the SR policy and the fourth PCEP initiate message includes the CC-ID (X).

Fig.8

900

receiving a first PCEP initiate message from a Path Computation Element (PCE), wherein the first PCEP initiate message comprises CCI with CC-ID (X) for creating SR policy

902

sending a first PCEP report message to the PCE upon creation of the SR policy, wherein the first PCEP report message is used to report by the PCC that the SR policy corresponding to the CC-ID (X) has been created

904

Fig.9

1000

receiving a second PCEP initiate message from the PCE wherein the second PCEP initiate message comprises a set of parameters for the SR policy and Association ID

1002

associating the candidate path (CP1) to the SR policy

1003

sending a second PCEP report message to the PCE, wherein the second PCEP report message is used to report the association of the created candidate path (CP1) to the SR policy and includes the Association ID

1004

Fig.10

1100

1102
receiving a third PCEP initiate message from the PCE to associate another candidate path (CP2) to the created SR policy, wherein the third PCEP initiate message includes the Association ID and not the SR policy parameters

1103
associating the candidate path (CP1) to the SR policy

1104
sending a third PCEP report message to the PCE, wherein the second PCEP report message is used to report the association of the created candidate path (CP2) to the SR policy and includes the Association ID

Fig.11

1200

1202
receiving a first PCEP update message from the PCE to update the candidate path (CP1), wherein the first PCEP update message includes the Association ID

1204
identifying the SR policy associated with the candidate path from the Association ID and updating the candidate path (CP1) within the SR policy

Fig.12

1300

1302
receiving a fourth PCEP initiate message from the PCC wherein the fourth PCEP initiate message to delete the SR policy and the fourth PCEP initiate message includes the CCI-ID (X).

1304
identifying the SR policy from the CC-ID (X) and deleting the SR policy

Fig.13

1400

1402

1404

Fig.14

1500

| | | |
|---|---|---|
| 1502 | 1504 | 1506 |

Fig.15

1600

| | |
|---|---|
| 1602 | 1604 |

Fig.16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BIDGOLI H et al.** PCEP extensions for p2mp sr policy; draft-hsd-pce-sr-p2mp-policy-00.txt. *PCEP EXTENSIONS FOR P2MP SR POLICY; DRAFT-HSD-PCE-SR-P2MP-POLICY-OO.TXT; INTERNET-DRAFT: NETWORK WORKING GROUP, INTERNET ENGINEERING TASK FORCE, IETF; STANDARDWORKINGDRAFT, INTERNET SOCIETY (ISOC) 4*, https://tools.ietf.org/html/draft-hsd- pce-sr-p2mp-policy-00

- **BIDGOLI H et al.** PCEP extensions for p2mp sr policy; draft-dhs- spring-pce-sr-p2mp-policy-00.txt. *PCEP EXTENSIONS FOR P2MP SR POLICY; DRAFT-DHS-SPRING-PCE-SR-P2MP- POLICY-00.TXT; INTERNET-DRAFT: NETWORK WORKING GROUP, INTERNET ENGINEERING TASK FORCE, IETF; STANDARDWORKINGDRAFT, INTERNET SOCIETY*, https://tools.ietforg/html/draft-dhs- spring-pce-sr-p2mp-policy-00